# EUROPÄISCHE PATENTSCHRIFT

(11) **EP 0 716 242 B1**
(45) Veröffentlichungstag und Bekanntmachung des Hinweises auf die Patenterteilung: **03.06.1998**
(21) Anmeldenummer: 95118760.8
(22) Anmeldetag: 29.11.1995
(51) Int. Cl.: F16D 27/00

(54) **Elektromotorische Betätigung einer Reibscheibenkupplung**
Electric motor drive of a friction coupling
Actionnement à moteur électrique d'un embrayage à friction

(30) Priorität: 08.12.1994 DE 4443649
(43) Veröffentlichungstag der Anmeldung: 12.06.1996
(73) Patentinhaber: ADAM OPEL AG, 65423 Rüsselsheim (DE)
(72) Erfinder: Indra, Friedrich, Prof. Dr.-Ing., D-64673 Zwingenberg (DE); Stoll, Helmut, Dipl.-Ing., D-64569 Nauheim (DE); Barnbeck, Armin, Dipl.-Ing., D-65239 Hochheim (DE)
(74) Vertreter: Bergerin, Ralf, Dipl.-Ing.

(56) Entgegenhaltungen:
- EP-A- 0 199 642
- EP-A- 0 322 265
- WO-A-89/04927
- DE-A- 3 518 868
- GB-A- 2 227 069
- US-A- 2 571 848
- US-A- 4 776 441

## Beschreibung

Die Erfindung betrifft eine elektromotorische Betätigung einer Reibscheibenkupplung, vorzugsweise einer Fahrkupplung eines Kraftfahrzeuges, die durch eine Kupplungsfeder ständig im Einrücksinne betätigt ist und durch einen auf die Kupplungsfeder wirkenden Druckring ausgerückt wird, wobei sich der Druckring an einem durch Verdrehen um seine Achse axial verstellbaren Ausrücklager abstützt und ein von einer elektromotorischen Steuereinheit angesteuerter reversierbarer Elektromotor auf das Ausrücklager verdrehend einwirkt.

WO-A- 89/04927, das als nächstliegender Stand der Technik angesehen wird, offenbart den Oberbegriff des Anspruchs 1.

Eine derartige Betätigung ist mit DE 41 40 122 A1 beschrieben. Bei dieser bekannten Ausführung arbeitet ein achsparallel zur Kupplungsachse angeordneter Elektromotor über ein stufenlos verstellbares Getriebe und ein Stirnradgetriebe mit fester Übersetzung auf eine Schraubenspindel eines Spindelgetriebes. Eine mit der Schraubenspindel zusammenwirkende Spindelmutter, die sich gegenüber Drehbewegungen an einem Gehäuseteil abstützt, trägt auf einem Wälzlager einen Druckring, welcher auf Kupplungsfedern derart einwirkt, daß die Kupplung bei Bewegung des Spindelgetriebes in die eine Richtung gelöst wird und bei Bewegung in die andere Richtung wieder einrückt. Damit der Elektromotor nach vollzogener Kupplungsschaltung vom Bordnetz getrennt werden kann, sind besondere mechanische Rastmittel vorgesehen.

Eine solche Betätigung erfordert erheblichen Bauaufwand und ist infolge seiner vielen mechanischen Bauteile auch relativ stark störanfällig.

Mit DE 35 18 868 A1 ist eine motorische Betätigung einer Kupplung beschrieben, bei der ein in einem Gehäuse gelagerter Elektromotor auf eine gleichfalls in diesem Gehäuse gelagerte Kupplungsbetätigungswelle über einen mit der Kupplungsausrückwelle verbundenen Ausrückhebel mit einem an seinem freien Ende befindlichen gezahnten Sektor einwirkt, in dem mit diesem zumindest ein Zahnrad kämmt, in welches eine mit der Welle des Elektromotors verbundene Schnecke eingreift. An dem Ausrückhebel greift weiterhin eine Feder an, welche beim Bewegen des Ausrückhebels aus einer Totpunktlage herausgeschwenkt wird und so die weitere Betätigung unterstützt.

Auch diese motorische Betätigung ist sehr bauaufwendig, schwer und teuer.

Es ist Aufgabe der Erfindung, eine elektromotorische Betätigung einer Reibscheibenkupplung der eingangs genannten Art zu schaffen, die einfach im Aufbau ist, mit geringerer Anzahl Teile als bekannte Ausführungen auskommt und trotzdem sicher in der Funktion ist.

Erfindungsgemäß wird diese Aufgabe dadurch gelöst, daß ein Gehäuse des Ausrücklagers zumindest in einem Bereich seines Umfangs eine Verzahnung mit mindestens der Breite des Stellweges des Ausrücklagers aufweist, in welche eine auf einer Welle des Elektromotors befestigte Schnecke unmittelbar eingreift.

Eine so ausgeführte Betätigung einer Reibscheibenkupplung kommt mit einem Minimum an Bauteilen aus und ist einfach und unkompliziert im Aufbau, so daß sie auch relativ einfach in ein Kupplungssystem eines Kraftfahrzeuges eingefügt werden kann.

In vorteilhafter Weise kann das Gehäuse des Ausrücklagers mit einem Steilgewinde auf einem entsprechenden Gegengewinde einer getriebegehäusefesten Halterung abgestützt sein.

Dabei können die Steilgewinde auch mit einem reibungsmindernden Kugelumlauf versehen sein.

Das Gehäuse des Ausrücklagers kann jedoch auch über an seiner einen Stirnfläche befindlichen Kugelrampen und in diesen gehalterten Kugeln an einer getriebegehäusefesten Halterung abgestützt sein.

Eine solche Ausführung ermöglicht einen ausreichenden axialen Hub des Ausrücklagers für die Betätigung einer Reibscheibenkupplung bei minimaler innerer Reibung, ist einfach und rationell herstellbar und sicher in der Funktion.

Von besonderem Vorteil ist es, die getriebegehäusefeste Abstützung des Ausrücklagers, das auf ihm gelagerte Gehäuse und den sich daran abstützenden Druckring sowie die an der Verzahnung des Gehäuses angreifende Schnecke mit Welle und Elektromotor zu einer vormontierbaren Einheit zusammenzufassen.

Bei einer Anwendung in einem Kraftfahrzeug kann so ohne erhöhten Montageaufwand gegenüber einem üblichen Kupplungsausrücklager am Montageband die erfindungsgemäße Betätigung in der Kupplungsglocke eines Schaltgetriebes eingesetzt werden. Anstelle einer mechanischen Anbindung zu einem Kupplungspedal wird nur der elektrische Kontakt zu einer an sich bekannten elektronischen Steuereinheit hergestellt.

Ein Ausführungsbeispiel der Erfindung ist nachstehend anhand einer Zeichnung näher beschrieben. Es zeigen
- Fig. 1:: eine Reibscheibenkupplung eines Kraftfahrzeuges im Schnitt mit einer erfindungsgemäßen elektromotorischen Betätigung;

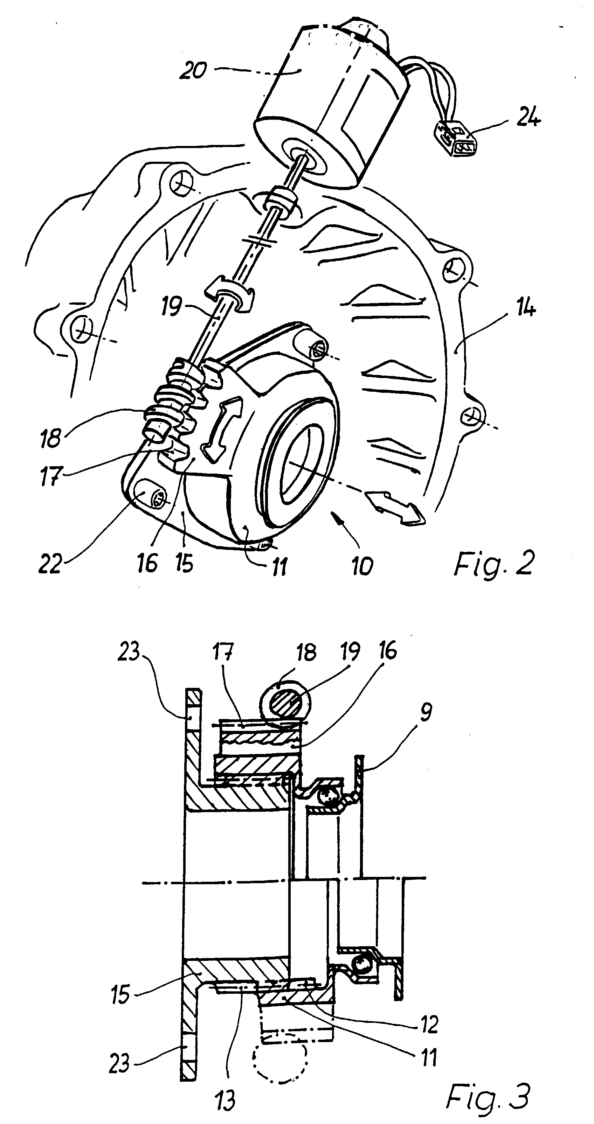

- Fig. 2:: eine schematisierte perspektivische Darstellung der elektromotorischen Betätigung nach Fig. 1;
- Fig. 3:: einen Schnitt durch das Ausrücklager einer Kupplungsbetätigung gemäß Fig. 1 und 2, wobei oberhalb der Mittellinie die Kupplung eingerückt und unterhalb der Mittellinie die Kupplung ausgerückt ist.

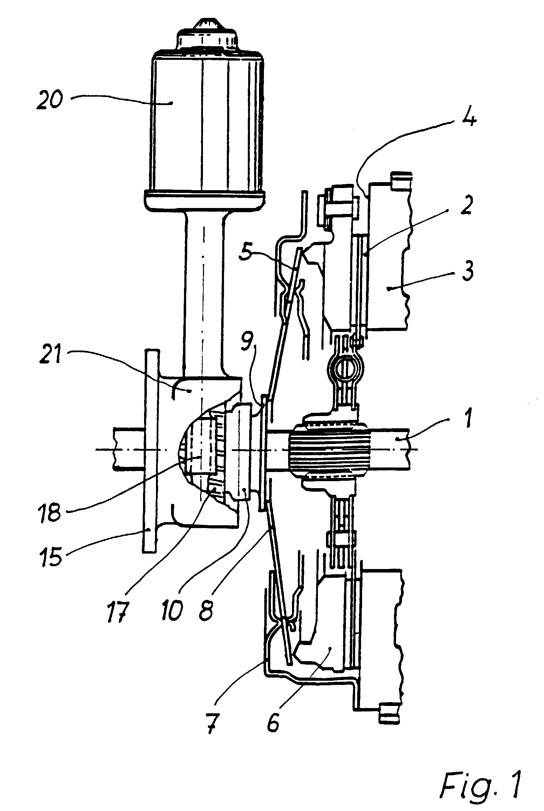

Die in Fig. 1 dargestellte Reibscheibenkupplung umfaßt eine mit der Getriebehauptwelle 1 drehfest verbundene Reibscheibe 2, eine vom Schwungrad 3 gebildete Gegendruckplatte 4, eine als Tellerfeder ausgebildete Kupplungsfeder 5, welche eine Druckplatte 6 in Richtung auf das Schwungrad 3 des Motors drückt und einen Kupplungsdeckel 7, der am Schwungrad 3 befestigt ist und an dem sich die Kupplungsfeder 5 abstützt. Die Reibscheibe 2 befindet sich zwischen der Druckplatte 6 und der Gegendruckplatte 4. Sie wird solange durch Reibung vom Schwungrad 3 mitgenommen, wie die Kupplungsfeder 5 auf die Druckplatte 6 drückt. Die Kupplungsfeder 5 hat zum Zentrum weisende Segmente 8, auf welche ein Druckring 9 eines Kupplungsausrücklagers 10 einwirken kann, um die Reibscheibenkupplung auszurücken. Ein Gehäuse 11 des Kupplungsausrücklagers 10, an dem der Druckring 9 drehbar gelagert ist, stützt sich über ein Steilgewinde 12 an seinem inneren Umfang an einem entsprechenden Steilgewinde 13 einer am Getriebegehäuse 14 eines Stufenwechselgetriebes befestigten Halterung 15 ab. Das Gehäuse 11 des Kupplungsausrücklagers 10 hat an einem Bereich 16 seines äußeren Umfangs eine Verzahnung 17. In die Verzahnung 17 greift eine Schnecke 18 ein. Die Schnecke 18 ist fest verbunden mit einer Welle 19, die von einem elektronisch ansteuerbaren Elektromotor 20 angetrieben ist. Die Welle 19 und mit ihr der Elektromotor 20 sind an einem mit der Halterung 15 fest verbundenen Lagerteil 21 gelagert. Dabei ist die Breite der Verzahnung 17 so bemessen, daß die mit der Halterung 15 axial festliegende Schnecke 18 in jeder Position des gegenüber der Halterung 15 axial verstellbaren Gehäuses 11 in Eingriff mit der Verzahnung 17 bleibt. Die Halterung 15, das auf ihr über das Steilgewinde 12, 13 abgestützte Gehäuse 11 mit dem Druckring 9 und der am Lagerteil 21 der Halterung 15 gelagerte Elektromotor 20 mit der Welle 19 und der Schnecke 18 bilden ein vormontiertes Aggregat, welches mittels Schrauben 22, die durch die Schraubenlöcher 23 geführt sind, am Getriebegehäuse 14 befestigt ist.

Eine nicht dargestellte elektronische Steuereinheit steuert in an sich bekannter Weise unter Auswertung der für die Kupplungsbetätigung relevanten Signale, wie Motordrehzahl, Ausgangsdrehzahl der Kupplung, Stellposition der Kupplung, Stellposition des Fahrpedals, Zustand des Antriebsstranges, Getriebeschaltabsicht, Gangstellung usw., den Elektromotor 20 mehr oder weniger schnell in Rechts- oder Linkslauf. Er treibt dabei die Schnecke 18, welche in Eingriff mit der Verzahnung 17 steht und damit das Gehäuse 12 gegenüber der Halterung 15 verdreht. Das Gehäuse 12 verschiebt sich infolge seiner Abstützung über das Steilgewinde 12, 13 axial gegenüber der Halterung 15, drückt mit dem Druckring 9 auf die Segmente 8 der Kupplungsfeder 5 und betätigt damit die Reibscheibenkupplung. Die Schnecke 18 gleitet dabei gleichzeitig über die Breite der Verzahnung 17.

Die Erfindung beschränkt sich nicht auf das beschriebene Ausführungsbeispiel. So kann zur Reduzierung der Reibung insbesondere im Steilgewinde 12, 13, aber auch zwischen Schnecke 18 und Verzahnung 17, ein Kugelumlauf vorgesehen sein. Anstelle des Steilgewindes 12, 13 können an der Halterung 15 und/oder am Gehäuse 11 des Kupplungsausrücklagers Kugelrampen mit Kugeln vorgesehen sein, welche den Betätigungshub des Gehäuses 11 bei seiner Verdrehung gegenüber der Halterung 15 auslösen. Eine erforderliche Nachstellung der Kupplungsbetätigung bei Verschleiß der Reibscheibe 2 kann in an sich bekannter Weise mechanisch durch eine angefederte Keilverstellung im Gehäuse 11 erfolgen oder aber durch sinnvolle Ansteuerung des Elektromotors 20. Die Schnecke 18 kann gegenüber der Verzahnung 17 auch selbsthemmend ausgebildet sein, so daß bei Bedarf die Stromzuführung zum Elektromotor 20 unterbrochen werden kann, ohne daß sich der Stellzustand der Betätigung verändert.

Der besondere Vorteil der Erfindung ist darin zu sehen, daß eine geschlossene Einbaueinheit als elektromotorische Betätigung geschaffen wurde, die mit vergleichbar geringem Aufwand an einem Getriebegehäuse 14 montierbar ist, eine mechanische Verbindung zu einem Kupplungspedal nicht erforderlich ist, sondern an diese vormontierbare Einbaueinheit ohne vorherige Einstellarbeit lediglich die elektrische Verbindung 24 zu der für das jeweilige Fahrzeug angelegten elektronischen Steuereinheit zu stecken ist.

## Patentansprüche

1. Elektromotorische Betätigung einer Reibscheibenkupplung, die durch eine Kupplungsfeder (5) ständig im Einrücksinne betätigt ist und durch einen auf die Kupplungsfeder wirkenden Druckring (9) ausgerückt wird, wobei sich der Druckring (9) an einem durch Verdrehen um seine Achse axial verstellbares Ausrücklager (10) abstützt und ein von einer elektronischen Steuereinheit angesteuerter Elektromotor (20) auf das Ausrücklager (10) verdrehend einwirkt, **dadurch gekennzeichnet**, daß ein Gehäuse (11) des Ausrücklagers (10) zumindest in einem Bereich (16) seines Umfanges eine Verzahnung (17) mit mindestens der Breite des Stellweges des Ausrücklagers (10) aufweist, in welche eine auf einer Welle (19) des Elektromotors (20) befestigte Schnecke (18) unmittelbar eingreift.

2. Elektromotorische Betätigung nach Anspruch 1, **dadurch gekennzeichnet**, daß das Gehäuse (11) des Ausrücklagers (10) über ein Steilgewinde (12) an seinem inneren Umfang und ein entsprechendes Steilgewinde (13) an einer getriebefesten Halterung (15) abgestützt ist.

3. Elektromotorische Betätigung nach Anspruch 2, **dadurch gekennzeichnet**, daß die Steilgewinde (12, 13) mit einem Kugelumlauf versehen sind.

4. Elektromotorische Betätigung nach Anspruch 1, **dadurch gekennzeichnet**, daß das Gehäuse (11) des Ausrücklagers (10) über an seiner Stirnfläche befindlichen Kugelrampen und in diesen gehalterten Kugeln an einer getriebegehäusefesten Halterung (15) abgestützt ist.

5. Elektromotorische Betätigung nach Anspruch 1 bis 4, **dadurch gekennzeichnet**, daß die getriebegehäusefeste Abstützung (15) des Ausrücklagers (10), das auf ihm gelagerte Gehäuse (11) und der sich daran abstützende Druckring (9) sowie die an der Verzahnung (17) des Gehäuses (11) angreifende Schnecke (18) mit Welle (19) und Elektromotor (20) eine vormontierte Einheit bilden.

## Claims

1. Electric motor operation of a friction plate clutch which is operated constantly in the direction of engagement by a clutch spring (5) and released by a thrust ring (9) acting on the clutch spring, wherein the thrust ring (9) is supported on a release bearing (10) which is axially displaceable by rotation about its axis and an electric motor (20) triggered by an electronic control unit has a rotating effect on the release bearing (10), characterised in that a housing (11) of the release bearing (10) at least in one region (16) of its circumference has teeth (17) which have at least the width of the path of displacement of the release bearing (10) and in which engages directly a screw (18) mounted on a shaft (19) of the electric motor (20).

2. Electric motor operation according to claim 1, characterised in that the housing (11) of the release bearing (10) is supported by a coarse thread (12) on its inner circumference and a corresponding coarse thread (13) on a support (15) fixed to the gearbox.

3. Electric motor operation according to claim 2, characterised in that the coarse threads (12, 13) are provided with recirculating ball bearings.

4. Electric motor operation according to claim 1, characterised in that the housing (11) of the release bearing (10) is supported by ball ramps located on its face and balls supported therein, on a support (15) fixed to the gearbox housing.

5. Electric motor operation according to claims 1 to 4, characterised in that the support (15) of the release bearing (10) which is fixed to the gearbox housing, the housing (11) mounted on it and the thrust ring (9) supported thereon as well as the screw (18) engaging the teeth (17) of the housing (11) with shaft (19) and electric motor (20) form a preassembled unit.

## Revendications

1. Commande à moteur électrique d'un embrayage à friction qui est sollicité en permanence dans le sens de l'embrayage par un ressort d'embrayage (5) et est débrayé par une bague de pression (9) agissant sur le ressort d'embrayage, la bague de pression (9) prenant appui sur une butée de débrayage (10) déplaçable dans la direction axiale par rotation autour de son axe et un moteur électrique (20) commandé par une unité de commande électronique agissant sur la butée de débrayage (10) aux fins de la faire tourner, caractérisée par le fait qu'un corps (11) de la butée de débrayage (10) comporte dans une zone (16) de son pourtour une denture (17) dont la longueur correspond au moins à la course de déplacement de la butée de débrayage (10) et avec laquelle une vis sans fin (18) solidaire d'un arbre (19) du moteur électrique (20) est en prise.

2. Commande à moteur électrique selon la revendication 1, caractérisée par le fait que le corps (11) de la butée de débrayage (10) prend appui par l'intermédiaire d'un filetage à pas élevé (12) prévu sur son pourtour intérieur sur un filetage à pas élevé (13) conjugué d'un support (15) lié à la boîte de vitesse.

3. Commande à moteur électrique selon la revendication 2, caractérisée par le fait que les filetages à pas élevé (12, 13) sont à recirculation de billes.

4. Commande à moteur électrique selon la revendication 1, caractérisée par le fait que le corps (11) de la butée de débrayage (10) prend appui par l'intermédiaire de rampes à billes (12) aménagées sur sa face frontale et des billes tenues dans celles-ci sur un support (15) lié à la boîte de vitesse.

5. Commande à moteur électrique selon une des revendications 1 à 4, caractérisée par le fait que le support (15) de la butée de débrayage (10) lié à la boîte de vitesse, le corps (11) monté sur celui-ci, la bague de pression (9) qui prend appui sur le corps ainsi que la vis sans fin (18) qui engrène avec la denture (17) du corps (11) forment un ensemble préassemblé avec l'arbre (19) et le moteur électrique (20).
